# EUROPEAN PATENT APPLICATION

(11) **EP 4 668 398 A1**
(43) Date of publication of application: **24.12.2025**
(21) Application number: 23934635.6
(22) Date of filing: 28.04.2023
(51) Int. Cl.: H01M 10/054, H01M 4/505

(54) **POSITIVE ELECTRODE ACTIVE MATERIAL, PREPARATION METHOD THEREFOR, AND POSITIVE ELECTRODE SHEET, BATTERY CELL, BATTERY AND ELECTRIC DEVICE COMPRISING SAME**

(71) Applicant: Contemporary Amperex Technology Co., Limited, Ningde, Fujian 352100 (CN)
(72) Inventor: WAN, Yuejuan, Ningde, Fujian 352100 (CN); GUO, Bingkun, Ningde, Fujian 352100 (CN); ZHANG, Xinxin, Ningde, Fujian 352100 (CN); XU, Longchao, Ningde, Fujian 352100 (CN)
(74) Representative: Kraus & Lederer PartGmbB
(86) International application number: PCT/CN2023/091758
(87) International publication number: WO 2024/221443

(57) **Abstract**

The present application provides a positive electrode active material, a preparation method thereof, and a positive electrode plate, a battery cell , a battery, and an electric device containing the same, where the positive electrode active material includes a matrix and a sodium-rich layer formed in situ on the surface of the matrix, the matrix includes a sodium-containing layered transition metal oxide, and the sodium-rich layer includes one or more of sodium salts represented by Formula (I) and Formula (II), where m represents an integer from 1 to 8, and n represents an integer from 2 to 20.

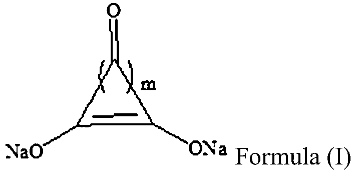

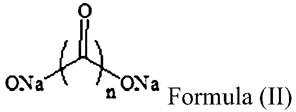

## Description

### TECHNICAL FIELD

The present application relates to a positive electrode active material, a preparation method thereof, and a positive electrode plate, a battery cell, a battery, and an electric device containing the same.

### BACKGROUND

In recent years, batteries have been widely used in energy storage power systems such as hydropower, thermal power, wind power, and solar power plants, as well as in various fields including electric tools, electric bicycles, electric motorcycles, electric vehicles, military equipment, and aerospace. Currently, lithium-ion batteries still hold a central position in the battery industry, but they also face significant challenges, such as the increasing scarcity of lithium resources. Sodium resources are far more abundant, more widely distributed, and significantly less costly than lithium resources. Therefore, sodium-ion batteries have emerged as a promising next-generation electrochemical system to replace lithium-ion batteries. The positive electrode active material is a key factor affecting the performance of sodium-ion batteries. Due to limitations in preparation processes, the surface of positive electrode active materials often contains a high amount of free alkaline substances, which can adversely affect the performance of sodium-ion batteries. Consequently, effective technical means are needed to enhance the performance of positive electrode active materials. The above statements are provided solely to offer background information related to the present application and do not necessarily constitute prior art.

### SUMMARY

The present application provides a positive electrode active material, a preparation method thereof, and a positive electrode plate, a battery cell, a battery, and an electric device containing the same, which can improve the energy density and cycling performance of the battery.

A first aspect of the present application provides a positive electrode active material, including a matrix and a sodium-rich layer formed in situ on a surface of the matrix, where the matrix includes a sodium-containing layered transition metal oxide, and the sodium-rich layer includes one or more of sodium salts represented by Formula (I) and Formula (II): 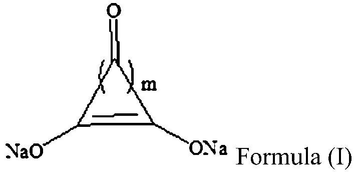 and 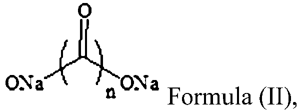 where m represents an integer from 1 to 8, and n represents an integer from 2 to 20.

The sodium-rich layer in the positive electrode active material provided by the embodiments of the present application is formed in situ on the surface of the matrix, thereby enabling uniform dispersion of the sodium salts on the matrix surface, reducing direct contact between the matrix and the electrolyte, minimizing side reactions, and enhancing the cycle stability of the positive electrode active material. The sodium-rich layer includes one or more of sodium salts represented by Formula (I) and Formula (II). The sodium salts can serve as a sodium supplement agent, providing an additional sodium source during the initial charging process of the battery (that is, the battery formation process) to compensate for the loss of active sodium during the formation of the solid electrolyte interphase (SEI) film on the negative electrode. During battery cycling, active sodium is gradually consumed, and the sodium salts represented by Formula (I) and Formula (II) can also provide excess active sodium stored in the negative electrode to compensate for the loss of active sodium during cycling, reducing the likelihood of excessive sodium ion extraction from the positive electrode active material, thereby enhancing the structural stability of the positive electrode active material and improving the cycling performance of the battery. The desodiation process of the sodium salts represented by Formula (I) and Formula (II) during the initial charging process of the battery is irreversible. During desodiation, the sodium salts also decompose to produce carbon dioxide, which is subsequently released as a gas, while the solid residue after desodiation primarily remains on the matrix surface in the form of elemental carbon, enhancing electronic conductivity, reducing polarization, and minimizing direct contact between the matrix and the electrolyte, thereby reducing side reactions and improving the cycling performance of the battery. Therefore, the positive electrode active material provided by the embodiments of the present application can enhance the energy density and cycling performance of the battery.

In any embodiment, the sodium-rich layer includes one or more of the following sodium salts:

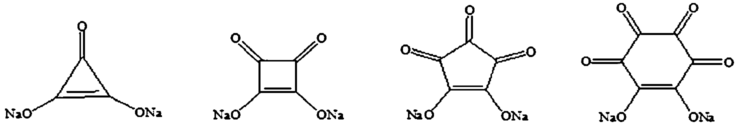

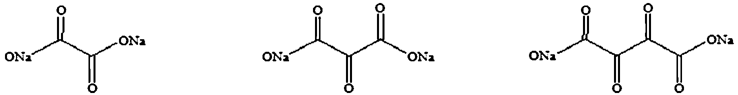

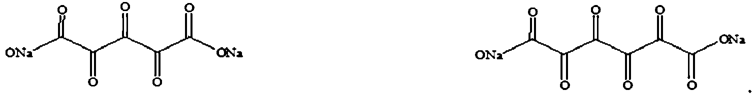

In any embodiment, the sodium-rich layer includes one or more of the following sodium salts:

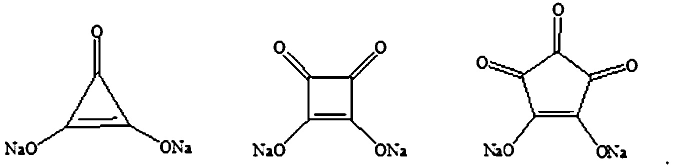

In any embodiment, a thickness of the sodium-rich layer is denoted as h, and a volume distribution particle size Dᵥ50 of the positive electrode active material is denoted as D, both in nm, where 0.005 ≤ h/D ≤ 0.05, optionally, 0.01 ≤ h/D ≤ 0.025. By adjusting h/D within the above range, the positive electrode active material can achieve high specific capacity and high structural stability, thereby enabling the battery to have high energy density and long cycle life.

In any embodiment, the thickness of the sodium-rich layer is 30-120 nm, optionally 40-100 nm. When the thickness of the sodium-rich layer is within the above range, the positive electrode active material can achieve high specific capacity and high cycle stability, thereby enabling the battery to have high energy density and long cycle life.

In any embodiment, the volume distribution particle size Dᵥ50 of the positive electrode active material is 2000-8000 nm. When the volume distribution particle size Dᵥ50 of the positive electrode active material is within the above range, it can achieve high specific capacity and high compacted density, as well as good ion transport capability, thereby enabling the battery to have higher energy density and longer cycle life.

In any embodiment, the sodium-rich layer is located on 80%-100% of the surface of the matrix, optionally 95%-100% of the surface. This can provide a good sodium supplementation effect, reduce direct contact between the matrix and the electrolyte, minimize side reactions, enhance the cycle stability of the positive electrode active material, and improve the cycling performance of the battery.

In any embodiment, the positive electrode active material includes one or more of O3 phase, P2 phase, and P3 phase.

In any embodiment, a percentage of free alkaline substances on the surface of the positive electrode active material is less than or equal to 13%, optionally less than or equal to 3.2%. A lower percentage of free alkaline substances on the surface of the positive electrode active material can enhance the interfacial stability of the positive electrode active material, thereby facilitating improved cycling performance and/or rate performance of the battery, as well as improving the processing performance of the positive electrode slurry and the battery.

In any embodiment, a pH of the positive electrode active material is 10.0-13.0, optionally 11.0-12.3. A lower pH of the positive electrode active material can enhance the interfacial stability of the positive electrode active material, thereby facilitating improved cycling performance and/or rate performance of the battery, as well as improving the processing performance of the positive electrode slurry and the battery.

In any embodiment, a carbon percentage of the positive electrode active material is 1%-13%, optionally 6.3%-8.5%.

In any embodiment, the sodium-containing layered transition metal oxide includes one or more of oxides represented by Formula (III):

NaₓMₐA_{b}B_{c}OₘQₙ Formula (III),

where 0 < x ≤ 1, 0 < a ≤ 1, 0 ≤ b ≤ 1/3, 0 ≤ c ≤ 1/3, 1.9 ≤ m ≤ 2, and 0 ≤ n ≤ 0.1; M includes one or more of Ni, Mn, Fe, Co, and Cu; A includes one or more metal elements from Group IA, Group IIA, Group IIIA, Group IVA, Group VA, Group IIB, Group IIIB, Group IVB, Group VB, and Group VIB, optionally including one or more elements from Li, K, Mg, Ca, Sr, Ba, Zn, La, Sc, Y, Ti, Zr, V, Nb, Ta, Cr, Mo, W, Al, Sn, Ge, Bi, and Sb; B includes one or more non-metal elements from Group IIIA, Group IVA, Group VA, and Group VIA, optionally including one or more elements from Si, P, B, S, and Se; and Q includes one or more non-metal elements from Group VA and Group VIIA, optionally including one or more elements from F, Cl, and N.

A second aspect of the present application provides a preparation method of a positive electrode active material, including the following steps:
providing a sodium-containing layered transition metal oxide, where a surface of the sodium-containing layered transition metal oxide includes free alkaline substances, and the alkaline substances include sodium hydroxide and/or sodium carbonate;
providing a solvent and a first reactive component, where the solvent includes a polar organic solvent, and the first reactive component includes one or more of compounds represented by Formula (1) and Formula (2): 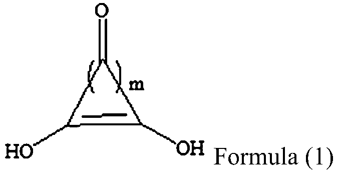 and 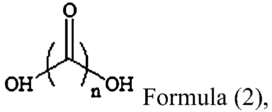
where m represents an integer from 1 to 8, and n represents an integer from 2 to 20; and
mixing the sodium-containing layered transition metal oxide, the solvent, and the first reactive component to allow the free alkaline substances on the surface of the sodium-containing layered transition metal oxide to react with the first reactive component to form sodium salts, followed by drying treatment to obtain the positive electrode active material, where the positive electrode active material includes a matrix and a sodium-rich layer formed in situ on a surface of the matrix, the matrix includes the sodium-containing layered transition metal oxide, and the sodium-rich layer includes sodium salts formed by the reaction of the free alkaline substances on the surface of the sodium-containing layered transition metal oxide with the first reactive component.

The preparation method provided by the embodiments of the present application can reduce the percentage of free alkaline substances on the surface of the matrix while minimizing damage to the bulk phase structure of the matrix. The preparation method provided by the embodiments of the present application can also form uniformly dispersed sodium salts in situ on the surface of the matrix, which can reduce polarization, provide an additional sodium source to compensate for the loss of active sodium during the formation of the SEI film on the negative electrode, and provide excess active sodium stored in the negative electrode to compensate for the loss of active sodium during battery cycling. Therefore, the positive electrode active material obtained by the preparation method provided by the embodiments of the present application can enhance the energy density and cycling performance of the battery, as well as improve the consistency of the battery.

In any embodiment, a molar ratio of the first reactive component to the sodium-containing layered transition metal oxide is less than or equal to 0.1:1, optionally 0.02:1 to 0.07:1. When the molar ratio of the first reactive component to the sodium-containing layered transition metal oxide is within the above range, it can effectively reduce the percentage of free alkaline substances on the surface of the matrix, provide an appropriate degree of sodium supplementation for the positive electrode active material, and enable the positive electrode active material to have high specific capacity and high structural stability, thereby enabling the battery to have high energy density and long cycle life.

In any embodiment, a mass ratio of the sodium-containing layered transition metal oxide to the solvent is 10:100 to 25:100, optionally 15:100 to 22:100. When the mass ratio of the sodium-containing layered transition metal oxide to the solvent is within the above range, it can effectively reduce the percentage of free alkaline substances on the surface of the matrix, provide an appropriate degree of sodium supplementation for the positive electrode active material, and enable the positive electrode active material to have high specific capacity and high structural stability, thereby enabling the battery to have high energy density and long cycle life.

In any embodiment, the first reactive component includes one or more of the following compounds:

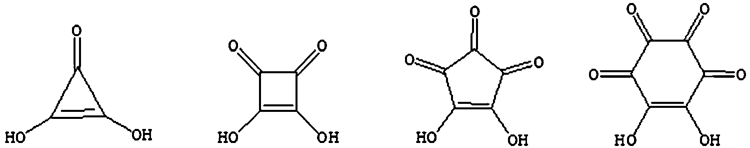

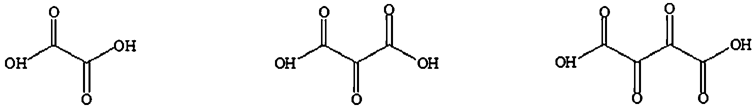

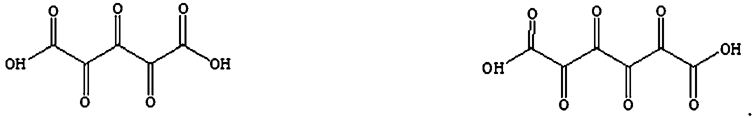

In any embodiment, the first reactive component includes one or more of the following compounds:

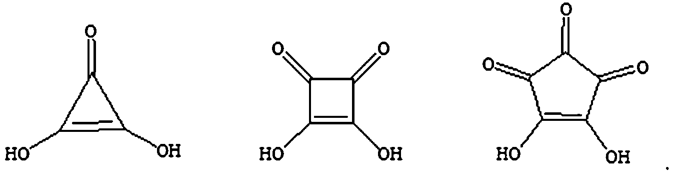

When the first reactive component is within the above range, it can not only effectively reduce the percentage of free alkaline substances on the surface of the matrix and provide an appropriate degree of sodium supplementation for the positive electrode active material, enabling the positive electrode active material to have high specific capacity, but also reduce the polarization of the positive electrode active material and enhance its structural stability. Therefore, when the first reactive component is within the above range, it can enable the battery to have high energy density and long cycle life.

In any embodiment, a temperature of the drying is less than or equal to a boiling point of the polar organic solvent, optionally, 10°C ≤ (boiling point of the polar organic solvent - drying temperature) ≤ 30°C. When the drying temperature is within the above range, it can effectively reduce the percentage of free alkaline substances on the surface of the matrix, provide an appropriate degree of sodium supplementation for the positive electrode active material, and enable the positive electrode active material to have high specific capacity and high structural stability, thereby enabling the battery to have high energy density and long cycle life.

In any embodiment, the drying is spray drying. Spray drying facilitates more uniform dispersion of the sodium salts formed by the reaction on the surface of the matrix and helps regulate the content of sodium salts on the surface of the matrix.

In any embodiment, the polar organic solvent includes one or more of alcohol solvents, ketone solvents, nitrile solvents, and ether solvents, optionally including one or more of ethanol, methanol, acetone, N-methylpyrrolidone, acetonitrile, tetrahydrofuran, and 1,4-dioxane.

In any embodiment, a volume fraction of the polar organic solvent is 80% to 100%, based on a total volume of the solvent.

In any embodiment, the solvent further includes water, and a volume fraction of water is less than or equal to 20%, based on the total volume of the solvent.

In any embodiment, the sodium-containing layered transition metal oxide includes one or more of oxides represented by Formula (III):

NaₓMₐA_{b}B_{c}OₘQₙ Formula (III),

where 0 < x ≤ 1, 0 < a ≤ 1, 0 ≤ b ≤ 1/3, 0 ≤ c ≤ 1/3, 1.9 ≤ m ≤ 2, and 0 ≤ n ≤ 0.1; M includes one or more of Ni, Mn, Fe, Co, and Cu; A includes one or more metal elements from Group IA, Group IIA, Group IIIA, Group IVA, Group VA, Group IIB, Group IIIB, Group IVB, Group VB, and Group VIB, optionally including one or more elements from Li, K, Mg, Ca, Sr, Ba, Zn, La, Sc, Y, Ti, Zr, V, Nb, Ta, Cr, Mo, W, Al, Sn, Ge, Bi, and Sb; B includes one or more non-metal elements from Group IIIA, Group IVA, Group VA, and Group VIA, optionally including one or more elements from Si, P, B, S, and Se; and Q includes one or more non-metal elements from Group VA and Group VIIA, optionally including one or more elements from F, Cl, and N.

In any embodiment, the volume distribution particle size Dᵥ50 of the sodium-containing layered transition metal oxide is 2000-8000 nm.

In any embodiment, the sodium-containing layered transition metal oxide includes one or more of O3 phase, P2 phase, and P3 phase.

A third aspect of the present application provides a positive electrode plate, including a positive electrode current collector and a positive electrode film layer disposed on at least one surface of the positive electrode current collector, where the positive electrode film layer includes the positive electrode active material of the first aspect of the present application or the positive electrode active material prepared by the method of the second aspect of the present application.

In any embodiment, a percentage of the positive electrode active material in the positive electrode film layer is 50 wt% to 99 wt%, optionally 85 wt% to 99 wt%, based on a total weight of the positive electrode film layer.

A fourth aspect of the present application provides a battery cell, including the positive electrode plate of the third aspect of the present application.

A fifth aspect of the present application provides a battery, including the battery cell of the fourth aspect of the present application.

A sixth aspect of the present application provides an electric device, including the battery of the fifth aspect of the present application.

The electric device of the present application includes the battery provided by the present application, thereby having at least the same advantages as the battery.

### BRIEF DESCRIPTION OF DRAWINGS

To more clearly illustrate the technical solutions of the embodiments of the present application, the drawings required for use in the embodiments of the present application are briefly introduced below. It is evident that the drawings described below are merely some embodiments of the present application, and those of ordinary skill in the art can obtain other drawings based on these drawings without creative effort.
FIG. 1 is a schematic diagram of an embodiment of a battery cell of the present application.
FIG. 2 is an exploded schematic diagram of the embodiment of the battery cell shown in FIG. 1.
FIG. 3 is a schematic diagram of an embodiment of a battery module of the present application.
FIG. 4 is a schematic diagram of an embodiment of a battery pack of the present application.
FIG. 5 is an exploded schematic diagram of the embodiment of the battery pack shown in FIG. 4.
FIG. 6 is a schematic diagram of an embodiment of an electric device including a battery of the present application as a power source.
FIG. 7 is an X-ray energy dispersive spectroscopy (EDS) diagram of the positive electrode active material prepared in Example 2.

In the drawings, the drawings are not necessarily drawn to actual scale. The description of reference signs is as follows: 1. battery pack; 2. upper case; 3. lower case; 4. battery module; 5. battery cell; 51. housing; 52. electrode assembly; and 53. cover plate.

### DESCRIPTION OF EMBODIMENTS

Hereinafter, embodiments specifically disclosing the positive electrode active material, the preparation method thereof, and the positive electrode plate, battery cell, battery, and electric device containing the same of the present application are described in detail with appropriate reference to the drawings. However, unnecessary detailed descriptions may be omitted. For example, detailed descriptions of well-known matters or redundant descriptions of substantially identical structures may be omitted. This is to avoid unnecessarily lengthy descriptions and facilitate understanding by those skilled in the art. Furthermore, the drawings and the following descriptions are provided to enable those skilled in the art to fully understand the present application and are not intended to limit the subject matter recited in the claims.

The "ranges" disclosed in the present application are defined in the form of lower and upper limits, where a given range is defined by selecting a lower limit and an upper limit, and the selected lower and upper limits define the boundaries of a particular range. Ranges defined in this manner may include or exclude the endpoints and may be arbitrarily combined, meaning any lower limit may be combined with any upper limit to form a range. For example, if ranges of 60-120 and 80-110 are listed for a specific parameter, it is understood that ranges of 60-110 and 80-120 are also contemplated. Additionally, if minimum range values of 1 and 2 are listed, and maximum range values of 3, 4, and 5 are listed, the following ranges are all contemplated: 1-3, 1-4, 1-5, 2-3, 2-4, and 2-5. In the present application, unless otherwise stated, the numerical range "a-b" represents an abbreviated representation of any combination of real numbers from a to b, where a and b are both real numbers. For example, the numerical range "0-5" indicates that all real numbers between "0-5" have been fully listed herein, and "0-5" is merely an abbreviated representation of these numerical combinations. Additionally, when a parameter is expressed as an integer ≥ 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions, and such technical solutions shall be considered included in the disclosure of the present application.

Unless otherwise specified, all technical features and optional technical features of the present application may be combined with each other to form new technical solutions, and such technical solutions shall be considered included in the disclosure of the present application.

Unless otherwise specified, all steps of the present application may be performed sequentially or randomly, preferably sequentially. For example, the method including steps (a) and (b) indicates that the method may include steps (a) and (b) performed sequentially, or steps (b) and (a) performed sequentially. For example, if it is mentioned that the method may further include step (c), it indicates that step (c) may be added to the method in any order, for example, the method may include steps (a), (b), and (c), or steps (a), (c), and (b), or steps (c), (a), and (b), and the like.

Unless otherwise specified, the terms "include" and "contain" mentioned in the present application indicate an open-ended or closed-ended inclusion. For example, "include" and "contain" may indicate that other components not listed may also be included or contained, or only the listed components may be included or contained.

Unless otherwise specified, in the present application, the term "or" is inclusive. For example, the phrase "A or B" means "A, B, or both A and B." More specifically, any of the following conditions satisfy the condition "A or B": A is true (or present) and B is false (or not present); A is false (or not present) and B is true (or present); or both A and B are true (or present).

In the present application, the terms "multiple" and "a plurality of" refer to two or more.

Unless otherwise specified, the terms used in the present application have the well-known meanings commonly understood by those skilled in the art.

Unless otherwise specified, the numerical values of the parameters mentioned in the present application may be measured using various test methods commonly used in the art, for example, they may be measured according to the test methods provided in the embodiments of the present application. Unless otherwise specified, the test temperature for all parameters is 25°C.

Unless otherwise specified, the ratio parameters involved in the present application are compared under the same unit. For example, if the ratio of the volume distribution particle size of A to B is 1:1, the units of the volume distribution particle size of A and B are the same.

The battery mentioned in the embodiments of the present application may be a single physical module including one or more battery cells to provide higher voltage and capacity. For example, the battery mentioned in the present application may include a battery cell, a battery module, or a battery pack, and the like.

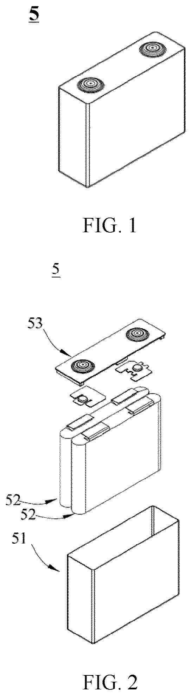

A battery cell is the smallest unit constituting a battery, capable of independently performing charge and discharge functions. The battery cell may have a cylindrical, flat, rectangular, or other shape, which is not limited in the embodiments of the present application. FIG. 1 is a battery cell 5 with a rectangular structure as an example.

When there are multiple battery cells, the multiple battery cells are connected in series, parallel, or a combination thereof via busbar components. In some embodiments, the battery may be a battery module; when there are multiple battery cells, the multiple battery cells are arranged and fixed to form a battery module. In some embodiments, the battery may be a battery pack, which includes a case and battery cells, with the battery cells or battery modules accommodated in the case. In some embodiments, the case may form part of the chassis structure of a vehicle. For example, a portion of the case may form at least a part of the floor of the vehicle, or a portion of the case may form at least a part of the crossbeams and longitudinal beams of the vehicle.

In some embodiments, the battery may be an energy storage device. Energy storage devices include energy storage containers, energy storage cabinets, and the like.

The battery cells provided by the embodiments of the present application include sodium-ion battery cells, sodium-metal battery cells, anode-free sodium-metal battery cells, and the like, which are not limited in the embodiments of the present application.

A battery cell generally includes an electrode assembly. The electrode assembly typically includes a positive electrode plate, a negative electrode plate, and a separator located between the positive electrode plate and the negative electrode plate. The electrode assembly may have a wound structure or a stacked structure, which is not limited in the embodiments of the present application.

The battery cell may further include an outer packaging, which may be used to encapsulate the electrode assembly and the electrolyte. The outer packaging may be a hard shell, such as a hard plastic shell, an aluminum shell, or a steel shell. The outer packaging may also be a soft pack, such as a pouch-type soft pack. The material of the soft pack may be plastic, such as one or more of polypropylene (PP), polybutylene terephthalate (PBT), and polybutylene succinate (PBS).

In some embodiments, as shown in FIG. 2, the outer packaging may include a housing 51 and a cover plate 53. The housing 51 may include a bottom plate and side plates connected to the bottom plate, with the bottom plate and side plates enclosing a receiving cavity. The housing 51 has an opening communicating with the receiving cavity, and the cover plate 53 is used to cover the opening to seal the receiving cavity. The electrode assembly 52 is encapsulated in the receiving cavity. The number of electrode assemblies 52 contained in the battery cell 5 may be one or more, adjustable according to requirements.

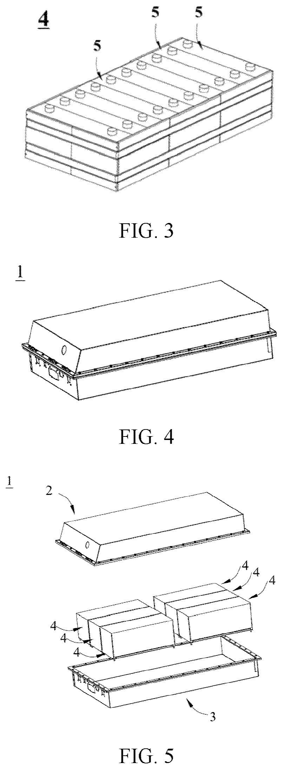

In some embodiments, the battery cell may be assembled into a battery module, and the number of battery cells contained in the battery module may be multiple, with the specific number adjustable according to the application and capacity of the battery module. FIG. 3 is a schematic diagram of a battery module 4 as an example. As shown in FIG. 3, in the battery module 4, multiple battery cells 5 may be sequentially arranged along the length direction of the battery module 4. Alternatively, they may be arranged in any other manner. Further, the multiple battery cells 5 may be fixed by fasteners.

Optionally, the battery module 4 may further include a shell with a receiving space, in which the multiple battery cells 5 are accommodated.

In some embodiments, the above battery module may further be assembled into a battery pack, and the number of battery modules contained in the battery pack may be adjusted according to the application and capacity of the battery pack.

FIG. 4 and FIG. 5 are schematic diagrams of a battery pack 1 as an example. As shown in FIG. 4 and FIG. 5, the battery pack 1 may include a case and multiple battery modules 4 disposed in the case. The case includes an upper case 2 and a lower case 3, where the upper case 2 is used to cover the lower case 3, forming a sealed space for accommodating the battery modules 4. The multiple battery modules 4 may be arranged in the case in any manner.

The positive electrode plate includes a positive electrode active material, and the performance of the positive electrode active material has a critical impact on the battery performance.

The positive electrode active material provided by the embodiments of the present application includes a matrix and a sodium-rich layer formed in situ on a surface of the matrix, where the matrix includes a sodium-containing layered transition metal oxide, and the sodium-rich layer includes one or more of sodium salts represented by Formula (I) and Formula (II): 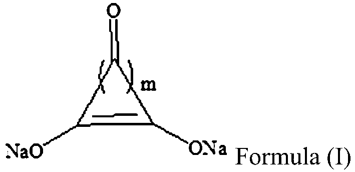 and 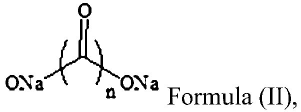 where m represents an integer from 1 to 8, and n represents an integer from 2 to 20.

The sodium-containing layered transition metal oxide typically consists of a transition metal layer formed by MO6 octahedra composed of transition metal M and six surrounding oxygen atoms, with sodium ions located between the transition metal layers, forming a layered structure with alternating MO6 transition metal layers and NaO6 sodium layers. During battery charge and discharge processes, the sodium-containing layered transition metal oxide is prone to lattice distortion and phase transitions, which hinder the transport and diffusion of sodium ions and may cause some sodium ions to become free on the material surface, reacting with the electrolyte to form irreversible active sodium loss, while also reducing the cycle stability of the battery.

The sodium-rich layer in the positive electrode active material provided by the embodiments of the present application is formed in situ on the surface of the matrix, thereby enabling uniform dispersion of the sodium salts on the matrix surface, reducing direct contact between the matrix and the electrolyte, minimizing side reactions, and enhancing the cycle stability of the positive electrode active material.

The sodium-rich layer includes one or more of sodium salts represented by Formula (I) and Formula (II), which can serve as a sodium supplement agent, providing an additional sodium source during the initial charging process of the battery (that is, the battery formation process) to compensate for the loss of active sodium during the formation of the SEI film on the negative electrode. Therefore, the positive electrode active material provided by the embodiments of the present application can achieve high specific capacity, thereby enhancing the energy density of the battery.

During battery cycling, active sodium is gradually consumed, and the sodium salts represented by Formula (I) and Formula (II) can also provide excess active sodium stored in the negative electrode to compensate for the loss of active sodium during cycling, reducing the likelihood of excessive sodium ion extraction from the positive electrode active material, thereby enhancing the structural stability of the positive electrode active material and improving the cycling performance of the battery.

The desodiation process of the sodium salts represented by Formula (I) and Formula (II) during the initial charging process of the battery is irreversible. During desodiation, the sodium salts also decompose to produce carbon dioxide, which is subsequently released as a gas, while the solid residue after desodiation primarily remains on the matrix surface in the form of elemental carbon, enhancing electronic conductivity, reducing polarization, and minimizing direct contact between the matrix and the electrolyte, thereby reducing side reactions and improving the cycling performance of the battery.

Therefore, the positive electrode active material provided by the embodiments of the present application can enhance the energy density and cycling performance of the battery.

Currently, the positive electrode sodium supplementation process typically involves physically mixing a sodium supplement agent as an additive with the positive electrode active material, then adding the mixture to a solvent to prepare a slurry and a positive electrode plate, and achieving sodium supplementation through the initial charging process of the battery (that is, the battery formation process). However, due to the typically low amount of sodium supplement agent used, uneven mixing occurs when physically mixed with the positive electrode active material. Additionally, the density and particle size of the sodium supplement agent itself significantly affect the uniformity of the prepared positive electrode slurry and positive electrode plate, leading to poor sodium supplementation effects and suboptimal electrochemical performance and consistency of the resulting battery.

The positive electrode active material provided by the embodiments of the present application includes a matrix and a sodium-rich layer formed in situ on the surface of the matrix, thereby providing a better sodium supplementation effect, enhancing the cycling performance of the battery, and enabling the prepared battery to have high consistency.

In some embodiments, m may represent an integer from 1 to 6, optionally an integer from 1 to 4, more optionally 1 or 2.

In some embodiments, n may represent an integer from 2 to 10, optionally an integer from 2 to 6, more optionally 2 or 3.

In some embodiments, the sodium-rich layer may include one or more of the following sodium salts:

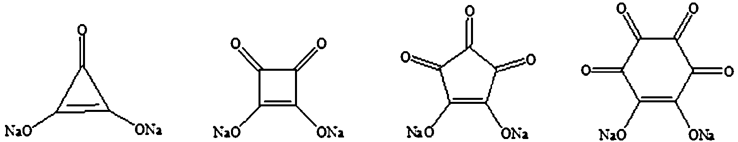

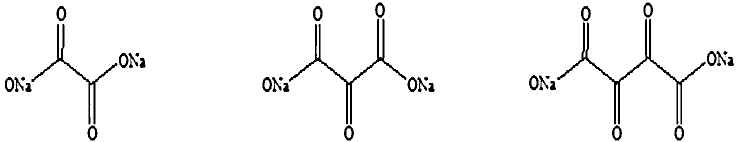

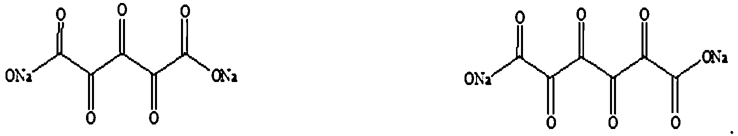

Optionally, the sodium-rich layer may include one or more of the following sodium salts:

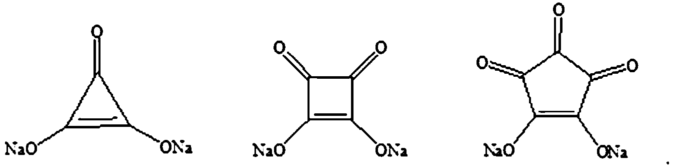

In some embodiments, a thickness of the sodium-rich layer is denoted as h, and a volume distribution particle size Dᵥ50 of the positive electrode active material is denoted as D, both in nm, where 0 < h/D ≤ 0.05. For example, h/D may be 0.005, 0.008, 0.01, 0.012, 0.015, 0.018, 0.02, 0.022, 0.025, 0.028, 0.03, 0.032, 0.035, 0.038, 0.04, 0.042, 0.045, 0.048, 0.05, or a range composed of any of the above values. Sodium salts themselves have a high voltage plateau, so when their content is high and the sodium-rich layer is thick, the sodium salts are prone to aggregating into large particles, which increases polarization, may affect the cycling performance of the battery, and increase the gas production of the battery. By adjusting h/D within the above range, the sodium salts are uniformly dispersed on the matrix surface with a thin thickness, and the carbon residue after desodiation of the sodium salts can also enhance the conductivity of the positive electrode active material to some extent, thereby achieving the sodium supplementation effect without increasing the gas production of the battery, enabling the battery to have good cycling performance.

In some embodiments, 0.005 ≤ h/D ≤ 0.05, 0.005 ≤ h/D ≤ 0.04, 0.008 ≤ h/D ≤ 0.03, 0.01 ≤ h/D ≤ 0.025, 0.012 ≤ h/D ≤ 0.022, and 0.016 ≤ h/D ≤ 0.020. By adjusting h/D within the above range, the positive electrode active material can achieve high specific capacity and high structural stability, thereby enabling the battery to have high energy density and long cycle life.

In some embodiments, the thickness of the sodium-rich layer may be 30-120 nm, for example, 30 nm, 40 nm, 45 nm, 50 nm, 55 nm, 59 nm, 62 nm, 64 nm, 70 nm, 75 nm, 78 nm, 86 nm, 93 nm, 100 nm, 110 nm, 120 nm, or a range composed of any of the above values.

In some embodiments, the thickness of the sodium-rich layer may be 40-100 nm, 59-93 nm, or 64-78 nm.

When the thickness of the sodium-rich layer is within the above range, the positive electrode active material can achieve high specific capacity and high cycle stability, thereby enabling the battery to have high energy density and long cycle life.

The thickness of the sodium-rich layer has a well-known meaning in the art and can be measured using well-known instruments and methods in the art. For example, the positive electrode plate after rolling can be cut into a sample of a certain size (for example, a 6 cm × 6 cm square) using scissors, polished using an ion cross-section polisher (for example, IB-19500CP) to obtain a polished sample with a cut surface; then, a transmission electron microscope (TEM) image is obtained, and the thickness of the sodium-rich layer is measured at 10 randomly selected positions in the image, with the average value taken as the test result.

In some embodiments, the volume distribution particle size Dᵥ50 of the positive electrode active material may be 2000-8000 nm. When the volume distribution particle size Dᵥ50 of the positive electrode active material is within the above range, it can achieve high specific capacity and high compacted density, as well as good ion transport capability, thereby enabling the battery to have higher energy density and longer cycle life.

The volume distribution particle size Dᵥ50 of the positive electrode active material has a well-known meaning in the art, representing the particle size corresponding to a cumulative volume distribution percentage of 50%, and can be measured using well-known instruments and methods in the art. For example, it can be conveniently measured using a laser particle size analyzer in accordance with GB/T 19077-2016. The test instrument may be a Mastersizer 2000E laser particle size analyzer from Malvern Instruments Ltd., UK.

In some embodiments, the sodium-rich layer may be located on 80%-100% of the surface of the matrix, optionally 85%-100%, 90%-100%, or 95%-100% of the surface. This can provide a good sodium supplementation effect, reduce direct contact between the matrix and the electrolyte, minimize side reactions, enhance the cycle stability of the positive electrode active material, and improve the cycling performance of the battery.

In some embodiments, the positive electrode active material may include one or more of O3 phase, P2 phase, and P3 phase.

In some embodiments, the sodium-containing layered transition metal oxide includes one or more of oxides represented by Formula (III):

NaₓMₐA_{b}B_{c}OₘQₙ Formula (III),

where 0 < x ≤ 1, 0 < a ≤ 1, 0 ≤ b ≤ 1/3, 0 ≤ c ≤ 1/3, 1.9 ≤ m ≤ 2, and 0 ≤ n ≤ 0.1; M includes one or more of Ni, Mn, Fe, Co, and Cu; A includes one or more metal elements from Group IA, Group IIA, Group IIIA, Group IVA, Group VA, Group IIB, Group IIIB, Group IVB, Group VB, and Group VIB; B includes one or more non-metal elements from Group IIIA, Group IVA, Group VA, and Group VIA; and Q includes one or more non-metal elements from Group VA and Group VIIA.

Unless otherwise specified, in the above chemical formula, when M consists of two or more elements, the numerical range limitation for a applies not only to the stoichiometric number of each element acting as M but also to the sum of the stoichiometric numbers of all elements acting as M. For example, when M consists of two or more elements M1, M2, ..., Mn, the stoichiometric numbers a1, a2, ..., an of M1, M2, ..., Mn must each fall within the numerical range defined for a in the present application, and the sum of a1, a2, ..., an must also fall within this numerical range. Similarly, in the embodiments of the present application, for cases where other elements consist of two or more elements, the numerical range limitation for their stoichiometric numbers has the same meaning.

M may include one or more of Ni, Mn, Fe, Co, and Cu. The sodium-containing layered transition metal oxide may be a unary material or a multi-element material. A "unary material" refers to a material containing only one transition metal M, for example, where the transition metal M includes one of Ni, Mn, Fe, Co, and Cu. A "multi-element material" refers to a material containing at least two transition metals M, for example, where the transition metal M includes at least two of Ni, Mn, Fe, Co, and Cu, such as a combination of Mn and Fe, a combination of Mn, Fe, and Ni, or a combination of Mn, Fe, and Cu, and the like.

In some embodiments, 0.5 ≤ x ≤ 1, optionally, 0.66 ≤ x ≤ 1.

In some embodiments, b is 0.

In some embodiments, 0 < b ≤ 1/3.

In some embodiments, c is 0.

In some embodiments, 0 < c ≤ 1/3.

In some embodiments, b is 0 and c is 0.

In some embodiments, 0 < b ≤ 1/3 and 0 < c ≤ 1/3.

In some embodiments, 0 ≤ b ≤ 1/3, 0 ≤ c ≤ 1/3, and 0 < b + c ≤ 1/3. When the total content of elements A and B is within an appropriate range, it helps to further enhance the cycling performance and/or rate performance of the battery.

In some embodiments, A includes one or more elements from Li, K, Mg, Ca, Sr, Ba, Zn, La, Sc, Y, Ti, Zr, V, Nb, Ta, Cr, Mo, W, Al, Sn, Ge, Bi, and Sb. This helps to enhance the structural stability of the positive electrode active material, thereby facilitating improved cycling performance and/or rate performance of the battery.

In some embodiments, B includes one or more elements from Si, P, B, S, and Se. This helps to enhance the structural stability of the positive electrode active material, thereby facilitating improved cycling performance and/or rate performance of the battery.

In some embodiments, n is 0.

In some embodiments, 0 < n ≤ 0.1. When the content of element Q is within an appropriate range, it helps to further enhance the cycling performance and/or rate performance of the battery.

In some embodiments, Q includes one or more elements from F, Cl, and N. This helps to enhance the structural stability of the positive electrode active material, thereby facilitating improved cycling performance and/or rate performance of the battery.

The content of each element in the positive electrode active material can be tested using inductively coupled plasma emission spectroscopy (ICP) in accordance with EPA 6010D-2014.

It should be noted that the shape of the positive electrode active material is not necessarily spherical; it may also be flaky or irregular. The positive electrode active material may consist of primary particles, secondary particles, or a mixture thereof.

The shape of the positive electrode active material can be tested using a scanning electron microscope. For example, it can be tested in accordance with JY/T010-1996. The test instrument may be a ZEISS Sigma 300.

In some embodiments, a percentage of free alkaline substances on the surface of the positive electrode active material may be less than or equal to 13%, optionally less than or equal to 10.2%, less than or equal to 8.7%, less than or equal to 5.2%, less than or equal to 3.2%, less than or equal to 2.5%, less than or equal to 2.0%, less than or equal to 1.7%, or less than or equal to 1.2%. A lower percentage of free alkaline substances on the surface of the positive electrode active material can enhance the interfacial stability of the positive electrode active material, thereby facilitating improved cycling performance and/or rate performance of the battery, as well as improving the processing performance of the positive electrode slurry and the battery.

The free alkaline substances on the surface of the positive electrode active material mainly refer to NaOH and Na₂CO₃, which can be determined by potentiometric titration. The percentage of free alkaline substances on the surface of the positive electrode active material varies depending on the type of positive electrode active material.

In some embodiments, a pH of the positive electrode active material may be 10.0-13.0, optionally 11.0-12.3. A lower pH of the positive electrode active material can enhance the interfacial stability of the positive electrode active material, thereby facilitating improved cycling performance and/or rate performance of the battery, as well as improving the processing performance of the positive electrode slurry and the battery.

The pH of the positive electrode active material can be tested using a pH meter. For example, it can be tested as follows: at 25°C, add an appropriate amount of positive electrode active material to deionized water (mass ratio of 1:9) to form a solution, seal it, and stir on a magnetic stirrer for a period (for example, 30 minutes). After stirring, place it in a 25°C water bath thermostat, let it stand for a period (for example, 1.5 hours), and then measure the pH value.

In some embodiments, a carbon percentage of the positive electrode active material may be 1%-13%, optionally 2%-12.7%, 4.2%-10.6%, or 6.3%-8.5%. The carbon percentage of the positive electrode active material can be tested using a high-frequency infrared carbon-sulfur analyzer (for example, CS996 series), with the test standard referencing GB/T 20123-2006.

### [Preparation method]

The embodiments of the present application also provide a method for preparing the above positive electrode active material, including the following steps:
providing a sodium-containing layered transition metal oxide, where a surface of the sodium-containing layered transition metal oxide includes free alkaline substances, and the alkaline substances include sodium hydroxide and/or sodium carbonate;
providing a solvent and a first reactive component, where the solvent includes a polar organic solvent, and the first reactive component includes one or more of compounds represented by Formula (1) and Formula (2): 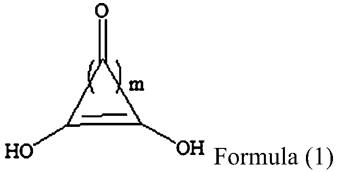 and 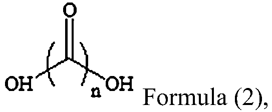
where m represents an integer from 1 to 8, and n represents an integer from 2 to 20; and
mixing the sodium-containing layered transition metal oxide, the solvent, and the first reactive component to allow the free alkaline substances on the surface of the sodium-containing layered transition metal oxide to react with the first reactive component to form sodium salts represented by Formula (I) and Formula (II), followed by drying treatment to obtain the positive electrode active material, where the positive electrode active material includes a matrix and a sodium-rich layer formed in situ on a surface of the matrix, the matrix includes the sodium-containing layered transition metal oxide, and the sodium-rich layer includes sodium salts formed by the reaction of the free alkaline substances on the surface of the sodium-containing layered transition metal oxide with the first reactive component, as represented by Formula (I) and Formula (II).

The sodium-containing layered transition metal oxide is typically obtained through a high-temperature sintering process. To improve yield and compensate for the volatilization of Na during high-temperature sintering, an excess of sodium source is usually added, resulting in some sodium source remaining on the surface of the positive electrode active material after the high-temperature sintering process, reacting with moisture and CO₂ in the air to form free alkaline substances such as NaOH and Na₂CO₃. These alkaline substances cause the positive electrode slurry to easily gel or solidify, affecting the coating performance of the positive electrode slurry and the performance of the battery. Additionally, the free alkaline substances continue to react with moisture and CO₂ in the air and the electrolyte, hindering the transport and diffusion of sodium ions, and even causing some sodium to be extracted from the bulk phase structure of the positive electrode active material, reducing the stability of the bulk phase structure. The bulk phase structure of the positive electrode active material is prone to irreversible phase transitions, which affects the capacity performance of the positive electrode active material and impacts the preparation and performance of the battery.

Currently, water washing or acid washing processes are typically used to reduce the percentage of free alkaline substances on the surface of the positive electrode active material. However, these methods reduce the sodium content of the positive electrode active material and irreversibly damage the bulk phase structure of the positive electrode active material, leading to reduced specific capacity and structural stability of the positive electrode active material, ultimately affecting the energy density and cycling performance of the battery.

The first reactive component includes one or more of compounds represented by Formula (1) and Formula (2), which can react with the free alkaline substances on the surface of the matrix, thereby effectively reducing the percentage of free alkaline substances while minimizing damage to the bulk phase structure of the matrix, enabling the positive electrode active material to have high structural stability.

The compounds represented by Formula (1) and Formula (2) contain carbonyl anions, which, after reacting with the free alkaline substances on the surface of the matrix, can form sodium salts represented by Formula (I) and Formula (II) in situ on the surface of the matrix, with the sodium salts uniformly dispersed on the matrix surface. The sodium salts represented by Formula (I) and Formula (II) can serve as a sodium supplement agent, providing an additional sodium source during the initial charging process of the battery (that is, the battery formation process) to compensate for the loss of active sodium during the formation of the SEI film on the negative electrode; they can also provide excess active sodium stored in the negative electrode to compensate for the loss of active sodium during battery cycling, enhancing the cycle stability of the positive electrode active material. The desodiation process of the sodium salts represented by Formula (I) and Formula (II) during the initial charging process of the battery is irreversible. During desodiation, the sodium salts also decompose to produce carbon dioxide, which is subsequently released as a gas, while the solid residue after desodiation primarily remains on the matrix surface in the form of elemental carbon, enhancing electronic conductivity, reducing polarization, and minimizing direct contact between the matrix and the electrolyte, thereby reducing side reactions and improving the cycling performance of the battery.

Currently, the positive electrode sodium supplementation process typically involves physically mixing a sodium supplement agent as an additive with the positive electrode active material, then adding the mixture to a solvent to prepare a slurry and a positive electrode plate, and achieving sodium supplementation through the initial charging process of the battery (that is, the battery formation process). However, due to the typically low amount of sodium supplement agent used, uneven mixing occurs when physically mixed with the positive electrode active material. Additionally, the density and particle size of the sodium supplement agent itself significantly affect the uniformity of the prepared positive electrode slurry and positive electrode plate, leading to poor sodium supplementation effects and suboptimal electrochemical performance and consistency of the resulting battery. The preparation method provided by the embodiments of the present application enables the sodium salts formed by the reaction to be uniformly dispersed on the surface of the matrix, thereby providing a better sodium supplementation effect, enhancing the energy density and cycling performance of the battery, and enabling the prepared battery to have high consistency.

The preparation method provided by the embodiments of the present application can reduce the percentage of free alkaline substances on the surface of the matrix while minimizing damage to the bulk phase structure of the matrix; the preparation method provided by the embodiments of the present application can also form uniformly dispersed sodium salts in situ on the surface of the matrix, which can reduce polarization, provide an additional sodium source to compensate for the loss of active sodium during the formation of the SEI film on the negative electrode, and provide excess active sodium stored in the negative electrode to compensate for the loss of active sodium during battery cycling. Therefore, the positive electrode active material obtained by the preparation method provided by the embodiments of the present application can enhance the energy density and cycling performance of the battery, as well as improve the consistency of the battery.

The thickness of the sodium-rich layer on the surface of the matrix of the positive electrode active material and the content of sodium salts are related to the type of the first reactive component, the amounts of the three components (that is, the sodium-containing layered transition metal oxide, the solvent, and the first reactive component), and parameters such as the drying temperature.

By adjusting the molar ratio of the first reactive component to the sodium-containing layered transition metal oxide, the reaction rate of the first reactive component with the sodium-containing layered transition metal oxide and the solubility of the generated sodium salts can be regulated, thereby adjusting the thickness and morphology of the sodium-rich layer on the surface of the matrix of the positive electrode active material, as well as the content of sodium salts and the degree of sodium supplementation of the positive electrode active material.

When the molar ratio of the first reactive component to the sodium-containing layered transition metal oxide is high, the reaction rate of the first reactive component with the sodium-containing layered transition metal oxide is fast, and the solubility of the generated sodium salts in the solvent is high, resulting in a thicker sodium-rich layer on the surface of the matrix of the positive electrode active material, thereby reducing the percentage of free alkaline substances and achieving a higher degree of sodium supplementation.

In some embodiments, the molar ratio of the first reactive component to the sodium-containing layered transition metal oxide may be less than or equal to 0.1:1. This can reduce the occurrence of the first reactive component corroding the matrix and facilitate the formation of a complete sodium-rich layer attached to the surface of the matrix, reducing direct contact between the matrix and the electrolyte and minimizing side reactions, thereby enabling the prepared positive electrode active material to have high structural stability and high specific capacity.

In some embodiments, the molar ratio of the first reactive component to the sodium-containing layered transition metal oxide may be 0.01:1 to 0.095:1, 0.02:1 to 0.08:1, 0.02:1 to 0.07:1, or 0.03:1 to 0.06:1. When the molar ratio of the first reactive component to the sodium-containing layered transition metal oxide is within the above range, it can effectively reduce the percentage of free alkaline substances on the surface of the matrix, provide an appropriate degree of sodium supplementation for the positive electrode active material, and enable the positive electrode active material to have high specific capacity and high structural stability, thereby enabling the battery to have high energy density and long cycle life.

In some embodiments, m may represent an integer from 1 to 6, optionally an integer from 1 to 4, more optionally 1 or 2.

In some embodiments, n may represent an integer from 2 to 10, optionally an integer from 2 to 6, more optionally 2 or 3.

In some embodiments, the first reactive component may include one or more of the following compounds:

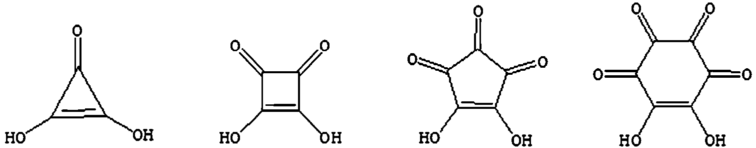

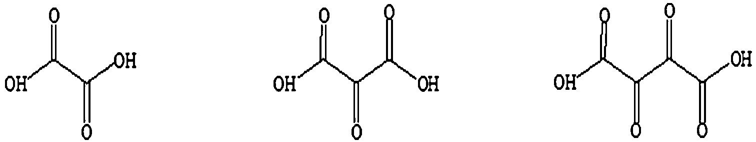

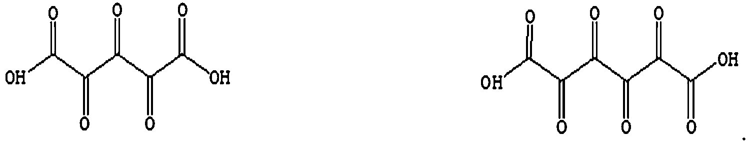

Optionally, the first reactive component may include one or more of the following compounds:

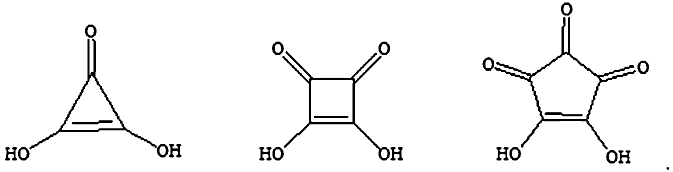

When the first reactive component is within the above range, it can not only effectively reduce the percentage of free alkaline substances on the surface of the matrix and provide an appropriate degree of sodium supplementation for the positive electrode active material, enabling the positive electrode active material to have high specific capacity, but also reduce the polarization of the positive electrode active material and enhance its structural stability. Therefore, when the first reactive component is within the above range, it can enable the battery to have high energy density and long cycle life.

In some embodiments, the polar organic solvent may include one or more of alcohol solvents, ketone solvents, nitrile solvents, and ether solvents. Optionally, the polar organic solvent may include one or more of ethanol, methanol, acetone, N-methylpyrrolidone (NMP), acetonitrile, tetrahydrofuran, and 1,4-dioxane.

In some embodiments, the volume fraction of the polar organic solvent may be 80% to 100%, based on the total volume of the solvent.

In some embodiments, the solvent may further include water, and the volume fraction of water is less than or equal to 20%, based on the total volume of the solvent.

In some embodiments, a mass ratio of the sodium-containing layered transition metal oxide to the solvent may be 10:100 to 25:100, optionally 15:100 to 22: 100. When the mass ratio of the sodium-containing layered transition metal oxide to the solvent is within the above range, it can effectively reduce the percentage of free alkaline substances on the surface of the matrix, provide an appropriate degree of sodium supplementation for the positive electrode active material, and enable the positive electrode active material to have high specific capacity and high structural stability, thereby enabling the battery to have high energy density and long cycle life.

The drying method may adopt methods known in the art, and the embodiments of the present application do not impose restrictions on this. In some embodiments, the drying may be spray drying. Spray drying facilitates more uniform dispersion of the sodium salts formed by the reaction on the surface of the matrix and helps regulate the content of sodium salts on the surface of the matrix.

By adjusting the drying temperature, the reaction rate of the first reactive component with the sodium-containing layered transition metal oxide and the solubility of the generated sodium salts can be regulated, thereby adjusting the thickness and morphology of the sodium-rich layer on the surface of the matrix of the positive electrode active material, as well as the content of sodium salts and the degree of sodium supplementation of the positive electrode active material.

When the drying temperature is high, the reaction rate of the first reactive component with the sodium-containing layered transition metal oxide is fast, and the solubility of the generated sodium salts in the solvent is high, resulting in a thicker sodium-rich layer on the surface of the matrix of the positive electrode active material, thereby reducing the percentage of free alkaline substances and achieving a higher degree of sodium supplementation.

In some embodiments, a temperature of the drying may be less than or equal to the boiling point of the polar organic solvent, optionally, 10°C ≤ (boiling point of the polar organic solvent - drying temperature) ≤ 30°C. When the temperature of the drying is within the above range, it can effectively reduce the percentage of free alkaline substances on the surface of the matrix, provide an appropriate degree of sodium supplementation for the positive electrode active material, and enable the positive electrode active material to have high specific capacity and high structural stability, thereby enabling the battery to have high energy density and long cycle life.

In some embodiments, the sodium-containing layered transition metal oxide includes one or more of oxides represented by Formula (III):

NaₓMₐA_{b}B_{c}OₘQₙ Formula (III),

where 0 < x ≤ 1, 0 < a ≤ 1, 0 ≤ b ≤ 1/3, 0 ≤ c ≤ 1/3, 1.9 ≤ m ≤ 2, and 0 ≤ n ≤ 0.1; M includes one or more of Ni, Mn, Fe, Co, and Cu; A includes one or more metal elements from Group IA, Group IIA, Group IIIA, Group IVA, Group VA, Group IIB, Group IIIB, Group IVB, Group VB, and Group VIB; B includes one or more non-metal elements from Group IIIA, Group IVA, Group VA, and Group VIA; and Q includes one or more non-metal elements from Group VA and Group VIIA.

Unless otherwise specified, in the above chemical formula, when M consists of two or more elements, the numerical range limitation for a applies not only to the stoichiometric number of each element acting as M but also to the sum of the stoichiometric numbers of all elements acting as M. For example, when M consists of two or more elements M1, M2, ..., Mn, the stoichiometric numbers al, a2, ..., an of M1, M2, ..., Mn must each fall within the numerical range defined for a in the present application, and the sum of a1, a2, ..., an must also fall within this numerical range. Similarly, in the embodiments of the present application, for cases where other elements consist of two or more elements, the numerical range limitation for their stoichiometric numbers has the same meaning.

M may include one or more of Ni, Mn, Fe, Co, and Cu. The sodium-containing layered transition metal oxide may be a unary material or a multi-element material. A "unary material" refers to a material containing only one transition metal M, for example, where the transition metal M includes one of Ni, Mn, Fe, Co, and Cu. A "multi-element material" refers to a material containing at least two transition metals M, for example, where the transition metal M includes at least two of Ni, Mn, Fe, Co, and Cu, such as a combination of Mn and Fe, a combination of Mn, Fe, and Ni, or a combination of Mn, Fe, and Cu, and the like.

In some embodiments, 0.5 ≤ x ≤ 1, optionally, 0.66 ≤ x ≤ 1.

In some embodiments, b is 0.

In some embodiments, 0 < b ≤ 1/3.

In some embodiments, c is 0.

In some embodiments, 0 < c ≤ 1/3.

In some embodiments, b is 0 and c is 0.

In some embodiments, 0 < b ≤ 1/3 and 0 < c ≤ 1/3.

In some embodiments, 0 ≤ b ≤ 1/3, 0 ≤ c ≤ 1/3, and 0 < b + c ≤ 1/3. When the total content of elements A and B is within an appropriate range, it helps to further enhance the cycling performance and/or rate performance of the battery.

In some embodiments, A includes one or more elements from Li, K, Mg, Ca, Sr, Ba, Zn, La, Sc, Y, Ti, Zr, V, Nb, Ta, Cr, Mo, W, Al, Sn, Ge, Bi, and Sb. This helps to enhance the structural stability of the positive electrode active material, thereby facilitating improved cycling performance and/or rate performance of the battery.

In some embodiments, B includes one or more elements from Si, P, B, S, and Se. This helps to enhance the structural stability of the positive electrode active material, thereby facilitating improved cycling performance and/or rate performance of the battery.

In some embodiments, n is 0.

In some embodiments, 0 < n ≤ 0.1. When the content of element Q is within an appropriate range, it helps to further enhance the cycling performance and/or rate performance of the battery.

In some embodiments, Q includes one or more elements from F, Cl, and N. This helps to enhance the structural stability of the positive electrode active material, thereby facilitating improved cycling performance and/or rate performance of the battery.

It should be noted that the shape of the sodium-containing layered transition metal oxide is not necessarily spherical; it may also be flaky or irregular. The sodium-containing layered transition metal oxide may consist of primary particles, secondary particles, or a mixture thereof.

In some embodiments, the volume distribution particle size Dᵥ50 of the sodium-containing layered transition metal oxide is 2000-8000 nm.

In some embodiments, the sodium-containing layered transition metal oxide includes one or more of O3 phase, P2 phase, and P3 phase.

In some embodiments, the sodium-containing layered transition metal oxide may be prepared using methods known in the art, for example, it may be obtained by solid-phase sintering or purchased commercially.

Unless otherwise specified, all raw materials used in the above preparation method can be obtained commercially.

### [Positive electrode plate]

The embodiments of the present application also provide a positive electrode plate.

The positive electrode plate includes a positive electrode current collector and a positive electrode film layer disposed on at least one surface of the positive electrode current collector, where the positive electrode film layer includes the positive electrode active material described above in the present application or the positive electrode active material prepared by the preparation method described above in the present application. The positive electrode current collector has two opposing surfaces in its thickness direction, and the positive electrode film layer is disposed on either or both of the two opposing surfaces of the positive electrode current collector.

In some embodiments, the percentage of the positive electrode active material in the positive electrode film layer is 50 wt% to 99 wt%, optionally 85 wt% to 99 wt%, based on the total weight of the positive electrode film layer.

The positive electrode film layer may further include other positive electrode active materials known in the art, for example, including but not limited to one or more of fluorides, sulfides, phosphates, pyrophosphates, metal-organic frameworks/metal hexacyanides, and organic compounds. These other positive electrode active materials may be used alone or in combination of two or more.

In some embodiments, the positive electrode film layer may optionally further include a positive electrode conductive agent. The present application does not impose specific restrictions on the type of positive electrode conductive agent. As an example, the positive electrode conductive agent may include one or more of superconducting carbon, conductive graphite, acetylene black, carbon black, Ketjen black, carbon dots, carbon nanotubes, graphene, and carbon nanofibers.

In some embodiments, the positive electrode film layer may optionally further include a positive electrode binder. The present application does not impose specific restrictions on the type of positive electrode binder. As an example, the positive electrode binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, fluorine-containing acrylate resin, styrene-butadiene rubber (SBR), water-soluble unsaturated resin SR-1B, water-based acrylic resin (for example, polyacrylic acid PAA, polymethacrylic acid PMAA, and sodium polyacrylate PAAS), polyacrylamide (PAM), polyvinyl alcohol (PVA), sodium alginate (SA), and carboxymethyl chitosan (CMCS).

In some embodiments, the positive electrode current collector may be a metal foil or a composite current collector. As an example of a metal foil, aluminum foil may be used. The composite current collector may include a polymer material base layer and a metal material layer formed on at least one surface of the polymer material base layer. As an example, the metal material may include one or more of aluminum, aluminum alloy, nickel, nickel alloy, titanium, titanium alloy, silver, and silver alloy. As an example, the polymer material base layer may include one or more of polypropylene (PP), polyethylene terephthalate (PET), polybutylene terephthalate (PBT), polystyrene (PS), and polyethylene (PE).

The positive electrode film layer is typically formed by coating a positive electrode slurry on the positive electrode current collector, followed by drying and cold pressing. The positive electrode slurry is usually formed by dispersing the positive electrode active material, optional conductive agent, optional binder, and any other components in a solvent and stirring uniformly. The solvent may be N-methylpyrrolidone (NMP), but is not limited thereto.

### [Negative electrode plate]

The battery cell includes a negative electrode plate. The structure and composition of the negative electrode plate may be selected according to the type of battery cell, and the embodiments of the present application do not impose restrictions on this.

In some embodiments, the negative electrode plate may include a negative electrode current collector and a negative electrode film layer disposed on at least one surface of the negative electrode current collector, where the negative electrode film layer includes a negative electrode active material. For example, the negative electrode current collector has two opposing surfaces in its thickness direction, and the negative electrode film layer is disposed on either or both of the two opposing surfaces of the negative electrode current collector.

The negative electrode active material may be a material known in the art, for example, including but not limited to one or more of soft carbon, hard carbon, and mesocarbon microbeads.

In some embodiments, the negative electrode film layer may optionally further include a negative electrode conductive agent. The present application does not impose specific restrictions on the type of negative electrode conductive agent. As an example, the negative electrode conductive agent may include one or more of superconducting carbon, conductive graphite, acetylene black, carbon black, Ketjen black, carbon dots, carbon nanotubes, graphene, and carbon nanofibers.

In some embodiments, the negative electrode film layer may optionally further include a negative electrode binder. The present application does not impose specific restrictions on the type of negative electrode binder. As an example, the negative electrode binder may include one or more of styrene-butadiene rubber (SBR), water-soluble unsaturated resin SR-1B, water-based acrylic resin (for example, polyacrylic acid PAA, polymethacrylic acid PMAA, and sodium polyacrylate PAAS), polyacrylamide (PAM), polyvinyl alcohol (PVA), sodium alginate (SA), and carboxymethyl chitosan (CMCS).

In some embodiments, the negative electrode film layer may optionally further include other additives. As an example, other additives may include thickeners, such as sodium carboxymethyl cellulose (CMC), or PTC thermistor materials.

The negative electrode film layer is typically formed by coating a negative electrode slurry on the negative electrode current collector, followed by drying and cold pressing. The negative electrode slurry is usually formed by dispersing the negative electrode active material, optional conductive agent, optional binder, and other optional additives in a solvent and stirring uniformly. The solvent may be N-methylpyrrolidone (NMP) or deionized water, but is not limited thereto.

The negative electrode plate does not exclude other additional functional layers besides the negative electrode film layer. For example, in some embodiments, the negative electrode plate may further include a conductive undercoating layer (for example, composed of a conductive agent and a binder) disposed between the negative electrode current collector and the negative electrode film layer on the surface of the negative electrode current collector; in some embodiments, the negative electrode plate may further include a protective layer covering the surface of the negative electrode film layer.

In some embodiments, the negative electrode plate may include a negative electrode current collector and a metal layer disposed on at least one surface of the negative electrode current collector, where the metal material in the metal layer may include one or more of elemental sodium or sodium alloy.

The sodium alloy may be an alloy formed by metallic sodium with other metal elements or non-metal elements. As an example, the other metal elements in the sodium alloy may include one or more elements from tin, zinc, aluminum, magnesium, silver, gold, gallium, indium, and platinum, and the non-metal elements in the sodium alloy may include one or more elements from boron, carbon, and silicon.

In some embodiments, the negative electrode plate may be a sodium foil or a sodium alloy foil.

In some embodiments, the negative electrode plate may include only a negative electrode current collector to assemble an anode-free sodium-metal battery cell.

In some embodiments, the negative electrode current collector may include a metal foil, a three-dimensional porous current collector, or a composite current collector. As an example of a metal foil, copper foil, copper alloy foil, nickel foil, or nickel alloy foil may be used. As an example of a three-dimensional porous current collector, copper mesh, nickel mesh, copper foam, or nickel foam may be used. The composite current collector may include a polymer material base layer and a metal material layer formed on at least one surface of the polymer material base layer. As an example, the metal material may include one or more of copper, copper alloy, nickel, nickel alloy, titanium, titanium alloy, silver, and silver alloy. As an example, the polymer material base layer may include one or more of polypropylene (PP), polyethylene terephthalate (PET), polybutylene terephthalate (PBT), polystyrene (PS), and polyethylene (PE).

### [Electrolyte]

The battery cell includes an electrolyte. The present application does not impose specific restrictions on the type of electrolyte, which may be selected according to requirements. For example, the electrolyte may include one or more selected from solid electrolytes and liquid electrolytes (that is, electrolytic solutions).

In some embodiments, the electrolyte is an electrolytic solution, which includes an electrolyte salt and a solvent.

The type of electrolyte salt is not specifically restricted and may be selected according to actual requirements. In some embodiments, as an example, the electrolyte salt may include one or more of NaPF₆, NaClO₄, NaBCl₄, NaSO₃CF₃, and Na(CH₃)C₆H₄SO₃.

The type of solvent is not specifically restricted and may be selected according to actual requirements. In some embodiments, as an example, the solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and diethyl sulfone (ESE).

In some embodiments, the electrolytic solution may optionally further include additives. For example, the additives may include negative electrode film-forming additives, positive electrode film-forming additives, or additives capable of improving certain battery performances, such as additives for improving battery overcharge performance, additives for improving battery high-temperature performance, or additives for improving battery low-temperature power performance.

### [Separator]

In battery cells using an electrolytic solution and some battery cells using a solid electrolyte, a separator may also be included. The separator is disposed between the positive electrode plate and the negative electrode plate, primarily to prevent internal short circuits.

The present application does not impose specific restrictions on the type of separator, and any well-known porous structure separator with good chemical and mechanical stability may be used.

In some embodiments, the material of the separator may include one or more of glass fiber, non-woven fabric, polyethylene, polypropylene, and polyvinylidene fluoride. The separator may be a single-layer film or a multilayer composite film. When the separator is a multilayer composite film, the materials of the layers may be the same or different.

The preparation method of the battery cell is well-known. In some embodiments, the positive electrode plate, separator, negative electrode plate, and electrolytic solution may be assembled to form a battery cell. As an example, the positive electrode plate, separator, and negative electrode plate may be formed into an electrode assembly through a winding process and/or a stacking process, placed in an outer packaging, dried, and then injected with the above electrolytic solution, followed by processes such as vacuum sealing, standing, formation, and shaping to obtain a battery cell. Multiple battery cells may further be connected in series, parallel, or a combination thereof to form a battery module. Multiple battery modules may further be connected in series, parallel, or a combination thereof to form a battery pack. In some embodiments, multiple battery cells may also directly form a battery pack.

### [Electric device]

The embodiments of the present application also provide an electric device, which includes the battery provided by the embodiments of the present application. The battery may be used as a power source for the electric device or as an energy storage unit for the electric device. The electric device may include, but is not limited to, mobile devices (for example, mobile phones, tablets, laptops), electric vehicles (for example, pure electric vehicles, hybrid electric vehicles, plug-in hybrid electric vehicles, electric bicycles, electric scooters, electric golf carts, electric trucks), electric trains, ships, satellites, energy storage systems, and the like.

The electric device may select the specific type of battery, such as a battery cell, battery module, or battery pack, according to its usage requirements.

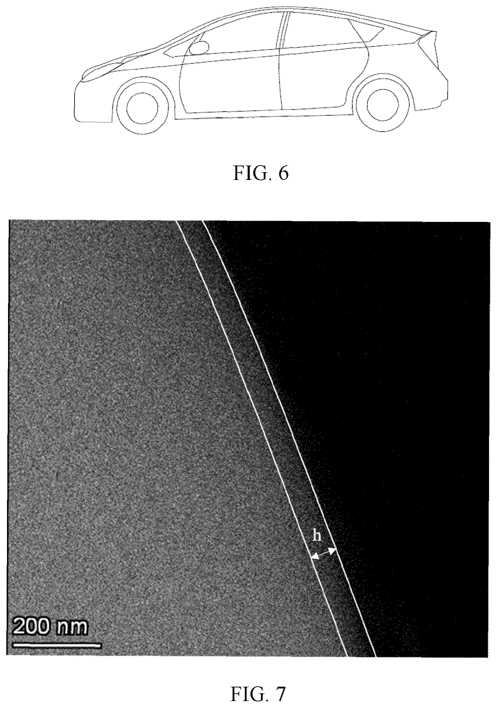

FIG. 6 is a schematic diagram of an electric device as an example. The electric device is a pure electric vehicle, a hybrid electric vehicle, or a plug-in hybrid electric vehicle, and the like. To meet the high power and high energy density requirements of the electric device, a battery pack or battery module may be used.

As another example, the electric device may be a mobile phone, tablet, laptop, and the like. Such electric devices typically require thin and lightweight designs, and a battery cell may be used as the power source.

### [Examples]

The following examples describe the content disclosed in the present application in more detail, and these examples are provided solely for illustrative purposes, as various modifications and changes within the scope of the disclosure of the present application will be apparent to those skilled in the art. Unless otherwise stated, all parts, percentages, and ratios reported in the following examples are by weight, all reagents used in the examples are commercially available or synthesized by conventional methods and can be used directly without further processing, and all instruments used in the examples are commercially available.

### [Comparative Example 1]

### (1) Preparation of positive electrode active material

Na₂CO₃, Fe₂O₃, NiO, and MnO₂ were weighed according to a molar ratio of Na:Fe:Ni:Mn = 1:0.3:0.3:0.3, and then uniformly mixed by ball milling; the ball-milled mixture was placed in a sintering furnace, heated from 25°C to 800°C at a heating rate of 5°C/min in an air atmosphere, and held at a constant temperature for 15 hours; after completion, it was naturally cooled to 25°C to obtain the layered transition metal oxide NaFe_{1/3}Ni_{1/3}Mn_{1/3}O₂, with a volume distribution particle size Dᵥ50 of 4000 nm.

### (2) Preparation of positive electrode plate

The positive electrode active material prepared above, conductive agent carbon black Super P, and binder polyvinylidene fluoride (PVDF) were mixed and ground uniformly at a weight ratio of 90:10:10, an appropriate amount of solvent N-methylpyrrolidone (NMP) was added, and stirred uniformly to obtain a positive electrode slurry. The positive electrode slurry was uniformly coated on an aluminum foil positive electrode current collector, followed by drying and cold pressing to obtain a positive electrode plate. The coating amount was 0.27 g/1540.25 mm².

### (3) Preparation of negative electrode plate

The negative electrode active material hard carbon, conductive agent carbon black Super P, binder styrene-butadiene rubber (SBR), and thickener sodium carboxymethyl cellulose (CMC) were dissolved in deionized water solvent at a weight ratio of 96.2:0.8:0.8:1.2, and a negative electrode slurry was obtained under the action of a vacuum mixer. The negative electrode slurry was uniformly coated on a copper foil negative electrode current collector, air-dried naturally, then transferred to a 120°C oven for drying for 1 hour, followed by cold pressing and slitting to obtain a negative electrode plate. The coating amount was 0.17 g/1540.25 mm².

### (4) Preparation of electrolytic solution

In an argon atmosphere glove box (H₂O < 0.1 ppm, O₂ < 0.1 ppm), ethylene carbonate (EC) and ethyl methyl carbonate (EMC) were mixed uniformly at a volume ratio of 3:7, and then NaPF₆ was dissolved in the above organic solvent to prepare an electrolytic solution with a mass fraction of 12.5%.

### (5) Preparation of battery

The positive electrode plate, a separator (a 12 µm thick polypropylene film), and the negative electrode plate were stacked in sequence and wound to obtain an electrode assembly; the electrode assembly was placed in an outer packaging, dried, and then injected with the electrolytic solution, followed by processes such as vacuum sealing, standing, formation, and shaping to obtain a battery.

### [Comparative Example 2]

Except for the preparation process of the positive electrode plate, the battery preparation process was the same as in Comparative Example 1.

### (2) Preparation of positive electrode plate

The positive electrode active material prepared in Comparative Example 1, conductive agent carbon black Super P, binder polyvinylidene fluoride (PVDF), and sodium salt N2 (as shown in Table 1) were mixed and ground uniformly at a weight ratio of 90:10:10:5, an appropriate amount of solvent N-methylpyrrolidone (NMP) was added, and stirred uniformly to obtain a positive electrode slurry. The positive electrode slurry was uniformly coated on an aluminum foil positive electrode current collector, followed by drying and cold pressing to obtain a positive electrode plate. The coating amount was 0.27 g/1540.25 mm².

Sodium salt N2 was prepared as follows: 0.01 mol of compound H2 (as shown in Table 1) was dissolved in 30 mL of deionized water to form solution A; 0.08 mol of sodium hydroxide was dissolved in 30 mL of deionized water to form solution B; and solution B was slowly added dropwise to solution A to form a precipitate, followed by filtration and drying to obtain sodium salt N2.

### [Examples 1 to 18]

Except for the preparation process of the positive electrode active material, the battery preparation process was the same as in Comparative Example 1.

### (1) Preparation of positive electrode active material

The layered transition metal oxide NaFe_{1/3}Ni_{1/3}Mn_{1/3}O₂ prepared in Comparative Example 1 was added to the solvent and first reactive component as shown in Tables 1 and 2, stirred uniformly, and then subjected to spray drying, with the outlet temperature (drying temperature) as shown in Table 2; after completion, a layered transition metal oxide coated with the sodium salts shown in Tables 1 and 2 was obtained. The mass ratio of the layered transition metal oxide NaFe_{1/3}Ni_{1/3}Mn_{1/3}O₂ to the solvent was 20:100, and the molar ratio of the first reactive component to the layered transition metal oxide NaFe_{1/3}Ni_{1/3}Mn_{1/3}O₂ was as shown in Table 2. D represents the volume distribution particle size Dᵥ50 of the positive electrode active material prepared in Examples 1 to 18, in nm.

**Table 1**

| | | | |
|---|---|---|---|
| Compound H1 | 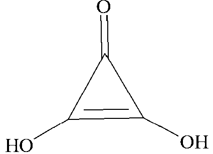 | Sodium salt N 1 | 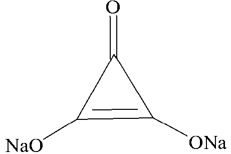 |
| Compound H2 | 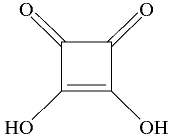 | Sodium salt N2 | 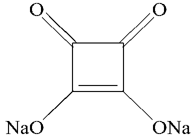 |
| Compound H3 | 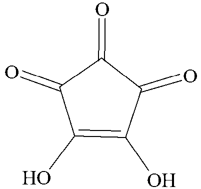 | Sodium salt N3 | 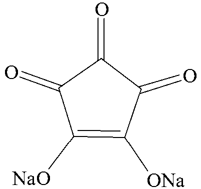 |
| Compound H4 | 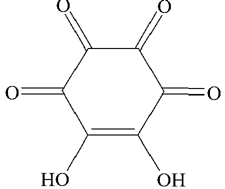 | Sodium salt N4 | 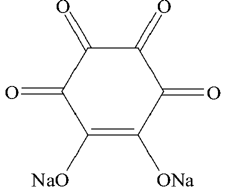 |
| Compound H5 | 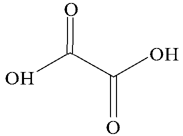 | Sodium salt N5 | 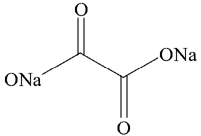 |
| Compound H6 | 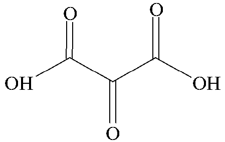 | Sodium salt N6 | 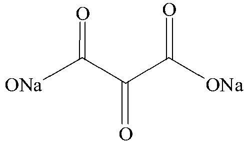 |
| Compound H7 | 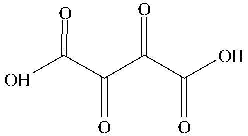 | Sodium salt N7 | 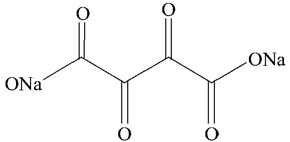 |
| Compound H8 | 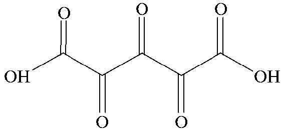 | Sodium salt N8 | 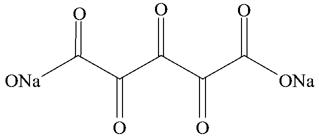 |
| Compound H9 | 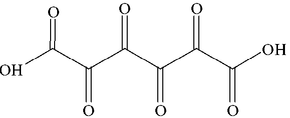 | Sodium salt N9 | 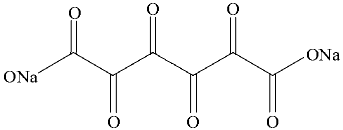 |

### Test section

### (1) Thickness test of sodium-rich layer

The positive electrode plate prepared above was cut into a 6 cm × 6 cm square sample using scissors, polished using an ion cross-section polisher (for example, IB-19500CP) to obtain a polished sample with a cut surface; a transmission electron microscope (TEM) image was obtained, and the thickness of the sodium-rich layer was measured at 10 randomly selected positions in the image, with the average value taken as the test result.

### (2) Test of percentage of free alkaline substances on the surface of positive electrode active material

At 25°C, 20 ± 0.5 g of the positive electrode active material powder prepared above was weighed into a 250 mL iodine flask, 150 mL of anhydrous ethanol was added, and stirred at 1200 RPM for 60 minutes, then sealed and left to stand for 10 minutes; subsequently, the mixture was vacuum filtered using a microporous filter membrane (for example, 0.45 µm PTFE microporous filter membrane), a certain amount of filtrate was taken, and titrated with a 0.05 mol/L hydrochloric acid-ethanol standard solution using a potentiometric titrator to obtain the percentage of free alkaline substances on the surface of the positive electrode active material.

The free alkaline substances on the surface of the positive electrode active material mainly refer to NaOH and Na₂CO₃.

### (3) Test of pH value of positive electrode active material

At 25°C, 2 g of the positive electrode active material prepared above was added to 18 g of deionized water to form a solution, sealed, and stirred on a magnetic stirrer for 30 minutes. After stirring, it was placed in a 25°C water bath thermostat, left to stand for 1.5 hours, and then the pH value was measured.

### (4) Carbon percentage test of positive electrode active material

At 25°C, *5 g* of the positive electrode active material prepared above was weighed into a dedicated crucible, an appropriate amount of flux (for example, a mixture of pure iron flux, pure tin flux, and pure tungsten flux) was added and mixed uniformly, and then the carbon percentage of the positive electrode active material was tested using a high-frequency infrared carbon-sulfur analyzer (for example, CS996 series). The test standard referenced GB/T 20123-2006.

### (5) Battery formation and capacity test

At 45°C, the battery prepared above (without undergoing the formation process) was charged at a constant current of 0.05C to 4.2 V, and the charge capacity at this time was recorded as C0; the battery was left to stand at 25°C for 5 minutes, then discharged at a constant current of 0.1C to 1.5 V, and the discharge capacity at this time was recorded as D0.

The first-cycle charge specific capacity (mAh/g) of the positive electrode active material = charge capacity C0 / mass of the positive electrode active material.

### (6) Battery cycling performance test

At 25°C, the battery after the formation and capacity test in step (5) was charged at a constant current of 0.33C to 4.2 V, followed by constant voltage charging until the current reached 0.05C, at which point the battery was fully charged, and the charge capacity at this time was recorded as C1; the battery was left to stand for 5 minutes, then discharged at a constant current of 0.33C to 1.5 V, and the discharge capacity at this time was recorded as D1. The battery was subjected to cyclic charge-discharge tests according to the above method, and the discharge capacity after each cycle was recorded until the discharge capacity of the battery decayed to 80% of D1, with the number of cycles at this point used to characterize the cycling performance of the battery.

The test results are shown in Table 2.

Based on the comprehensive test results in Table 2, it can be seen that the positive electrode active material provided by the embodiments of the present application is a layered transition metal oxide with sodium salts formed in situ on its surface. The sodium salts can reduce the percentage of free alkaline substances on the surface of the positive electrode active material, lower the pH of the positive electrode active material, increase the specific capacity of the positive electrode active material, and enhance the cycling performance of the battery.

From the test results of Examples 1-18 and Comparative Example 2, it can be seen that when sodium salts are physically mixed as additives with the positive electrode active material and then added to a solvent to prepare a slurry and a positive electrode plate, the sodium supplementation effect of the sodium salts is poor, and the cycling performance of the battery is suboptimal. This is because the amount of sodium salts used is typically small, leading to uneven mixing when physically mixed with the positive electrode active material. Additionally, the density and particle size of the sodium salts themselves significantly affect the uniformity of the prepared positive electrode slurry and positive electrode plate, thereby impacting the sodium supplementation effect and the cycling performance of the battery.

FIG. 7 is an X-ray energy dispersive spectroscopy (EDS) diagram of the positive electrode active material prepared in Example 2, where the positive electrode active material includes a matrix and a sodium-rich layer formed in situ on the surface of the matrix, with the thickness of the sodium-rich layer denoted as h. From FIG. 7, it can be seen that carbon elements are uniformly distributed on the surface of the matrix, indicating that the sodium salts in the sodium-rich layer are uniformly attached to the surface of the matrix, thereby effectively reducing direct contact between the matrix and the electrolyte, minimizing side reactions, and enhancing the cycling performance of the battery.

It should be noted that the present application is not limited to the above embodiments. The above embodiments are merely examples, and embodiments having substantially the same technical idea and achieving the same effects within the scope of the technical solutions of the present application are included in the technical scope of the present application. Additionally, various modifications that those skilled in the art can conceive and other configurations constructed by combining some constituent elements of the embodiments without departing from the gist of the present application are also included in the scope of the present application.

**Table 2**

| No. | First reactive component | Solvent | Molar ratio of first reactive component to layered transition metal oxide | Drying temperature (°C) | Sodium salt type | Positive electrode active material | | | | | | Battery cycle count |
|---|---|---|---|---|---|---|---|---|---|---|---|---|
| | | | | | | Thickness of sodium-rich layer h (nm) | h/D | Percentage of free alkaline substances | pH value | First-cycle charge specific capacity (mAh/g) | Carbon percentage | |
| Comparative Example 1 | / | / | / | / | / | / | / | 13.6% | 13.05 | 150 | 0.52% | 706 |
| Comparative Example 2 | / | / | / | / | / | / | / | 14.2% | 13.10 | 152 | 0.58% | 598 |
| Example 1 | Compound H1 | Ethanol | 0.05:1 | 65 | Sodium salt N1 | 78 | 0.020 | 1.2% | 11.50 | 165 | 6.34% | 916 |
| Example 2 | Compound H2 | Ethanol | 0.05:1 | 65 | Sodium salt N2 | 75 | 0.019 | 0.5% | 11.29 | 169 | 8.50% | 1080 |
| Example 3 | Compound H3 | Ethanol | 0.05:1 | 65 | Sodium salt N3 | 86 | 0.022 | 1.7% | 11.82 | 158 | 10.56% | 899 |
| Example 4 | Compound H4 | Ethanol | 0.05:1 | 65 | Sodium salt N4 | 70 | 0.018 | 1.8% | 11.94 | 155 | 12.67% | 789 |
| Example 5 | Compound H5 | Ethanol | 0.05:1 | 65 | Sodium salt N5 | 86 | 0.022 | 0.7% | 11.36 | 163 | 4.23% | 815 |
| Example 6 | Compound H6 | Ethanol | 0.05:1 | 65 | Sodium salt N6 | 93 | 0.023 | 1.6% | 11.63 | 160 | 6.34% | 756 |
| Example 7 | Compound H7 | Ethanol | 0.05:1 | 65 | Sodium salt N7 | 59 | 0.015 | 2.3% | 12.13 | 156 | 8.45% | 720 |
| Example 8 | Compound H8 | Ethanol | 0.05:1 | 65 | Sodium salt N8 | 79 | 0.020 | 2.0% | 12.03 | 154 | 10.56% | 709 |
| Example 9 | Compound H9 | Ethanol | 0.05:1 | 65 | Sodium salt N9 | 62 | 0.016 | 3.6% | 12.36 | 153 | 12.69% | 712 |
| Example 10 | Compound H2 | Ethanol | 0.005:1 | 65 | Sodium salt N2 | 40 | 0.010 | 10.2% | 12.89 | 154 | 2.01% | 723 |
| Example 11 | Compound H2 | Ethanol | 0.02:1 | 65 | Sodium salt N2 | 47 | 0.012 | 8.7% | 12.75 | 157 | 3.56% | 842 |
| Example 12 | Compound H2 | Ethanol | 0.03:1 | 65 | Sodium salt N2 | 55 | 0.014 | 5.2% | 12.48 | 161 | 5.02% | 905 |
| Example 13 | Compound H2 | Ethanol | 0.04:1 | 65 | Sodium salt N2 | 64 | 0.016 | 3.2% | 12.30 | 165 | 7.26% | 958 |
| Example 14 | Compound H2 | Ethanol | 0.07:1 | 65 | Sodium salt N2 | 92 | 0.023 | 0.4% | 11.00 | 170 | 10.58% | 862 |
| Example 15 | Compound H2 | Ethanol | 0.1:1 | 65 | Sodium salt N2 | 100 | 0.025 | 0.2% | 10.53 | 167 | 12.03% | 731 |
| Example 16 | Compound H2 | Ethanol | 0.05:1 | 50 | Sodium salt N2 | 40 | 0.010 | 2.5% | 12.19 | 153 | 6.89% | 853 |
| Example 17 | Compound H2 | Ethanol | 0.05:1 | 60 | Sodium salt N2 | 65 | 0.016 | 1.7% | 11.88 | 159 | 7.15% | 895 |
| Example 18 | Compound H2 | Ethanol | 0.05:1 | 70 | Sodium salt N2 | 100 | 0.025 | 0.5% | 11.20 | 165 | 8.48% | 789 |

## Claims

1. A positive electrode active material, comprising a matrix and a sodium-rich layer formed in situ on a surface of the matrix, wherein the matrix comprises a sodium-containing layered transition metal oxide, and the sodium-rich layer comprises one or more of sodium salts represented by Formula (I) and Formula (II): 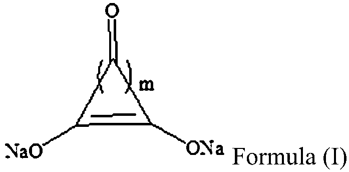 and 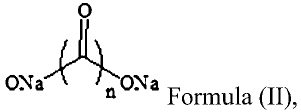 wherein m represents an integer from 1 to 8, and n represents an integer from 2 to 20.

2. The positive electrode active material according to claim 1, wherein the sodium-rich layer comprises one or more of the following sodium salts: 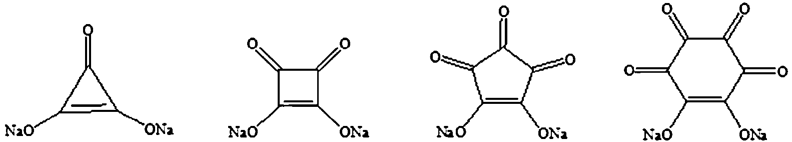 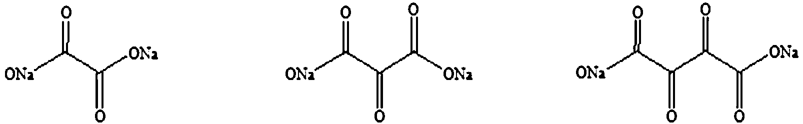 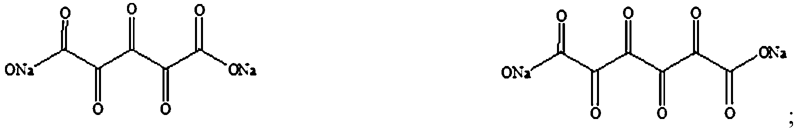 and optionally, the sodium-rich layer comprises one or more of the following sodium salts:

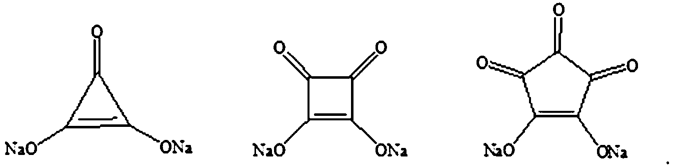

3. The positive electrode active material according to claim 1 or 2, wherein a thickness of the sodium-rich layer is denoted as h, and a volume distribution particle size Dᵥ50 of the positive electrode active material is denoted as D, both in nm, wherein 0.005 ≤ h/D ≤ 0.05, optionally, 0.01 ≤ h/D ≤ 0.025.

4. The positive electrode active material according to claim 3, wherein
the thickness of the sodium-rich layer is 30-120 nm, optionally 40-100 nm; and/or,
the volume distribution particle size Dᵥ50 of the positive electrode active material is 2000-8000 nm.

5. The positive electrode active material according to any one of claims 1-4, wherein
the sodium-rich layer is located on 80%-100% of the surface of the matrix, optionally 95%-100% of the surface; and/or,
the positive electrode active material comprises one or more of O3 phase, P2 phase, and P3 phase; and/or,
a percentage of free alkaline substances on the surface of the positive electrode active material is less than or equal to 13%, optionally less than or equal to 3.2%; and/or,
a pH of the positive electrode active material is 10.0-13.0, optionally 11.0-12.3; and/or,
a carbon percentage of the positive electrode active material is 1%-13%, optionally 6.3%-8.5%.

6. The positive electrode active material according to any one of claims 1-5, wherein the sodium-containing layered transition metal oxide comprises one or more of oxides represented by Formula (III):
NaₓMₐA_{b}B_{c}OₘQₙ Formula (III),
wherein 0 < x ≤ 1, 0 < a ≤ 1, 0 ≤ b ≤ 1/3, 0 ≤ c ≤ 1/3, 1.9 ≤ m ≤ 2, and 0 ≤ n ≤ 0.1;
M comprises one or more of Ni, Mn, Fe, Co, and Cu;
A comprises one or more metal elements from Group IA, Group IIA, Group IIIA, Group IVA, Group VA, Group IIB, Group IIIB, Group IVB, Group VB, and Group VIB, optionally comprising one or more elements from Li, K, Mg, Ca, Sr, Ba, Zn, La, Sc, Y, Ti, Zr, V, Nb, Ta, Cr, Mo, W, Al, Sn, Ge, Bi, and Sb;
B comprises one or more non-metal elements from Group IIIA, Group IVA, Group VA, and Group VIA, optionally comprising one or more elements from Si, P, B, S, and Se; and
Q comprises one or more non-metal elements from Group VA and Group VIIA, optionally comprising one or more elements from F, Cl, and N.

7. A preparation method of a positive electrode active material, comprising the following steps:
providing a sodium-containing layered transition metal oxide, wherein a surface of the sodium-containing layered transition metal oxide comprises free alkaline substances, and the alkaline substances comprise sodium hydroxide and/or sodium carbonate;
providing a solvent and a first reactive component, wherein the solvent comprises a polar organic solvent, and the first reactive component comprises one or more of compounds represented by Formula (1) and Formula (2): 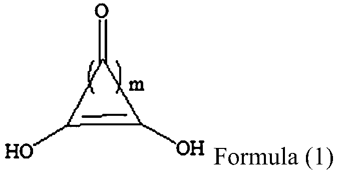 and 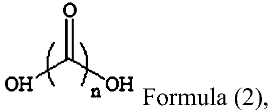
wherein m represents an integer from 1 to 8, and n represents an integer from 2 to 20; and
mixing the sodium-containing layered transition metal oxide, the solvent, and the first reactive component to allow the free alkaline substances on the surface of the sodium-containing layered transition metal oxide to react with the first reactive component to form sodium salts, followed by drying treatment to obtain the positive electrode active material,
wherein the positive electrode active material comprises a matrix and a sodium-rich layer formed in situ on a surface of the matrix, the matrix comprises the sodium-containing layered transition metal oxide, and the sodium-rich layer comprises sodium salts formed by the reaction of the free alkaline substances on the surface of the sodium-containing layered transition metal oxide with the first reactive component.

8. The method according to claim 7, wherein
a molar ratio of the first reactive component to the sodium-containing layered transition metal oxide is less than or equal to 0.1:1, optionally 0.02:1 to 0.07:1; and/or,
a mass ratio of the sodium-containing layered transition metal oxide to the solvent is 10:100 to 25:100, optionally 15:100 to 22:100.

9. The method according to claim 7 or 8, wherein the first reactive component comprises one or more of the following compounds: 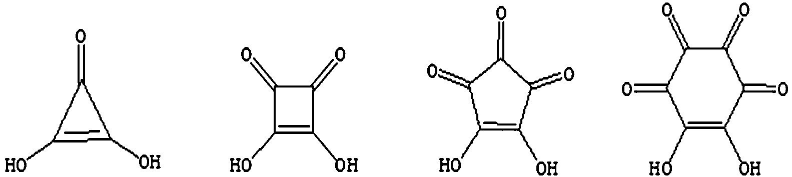 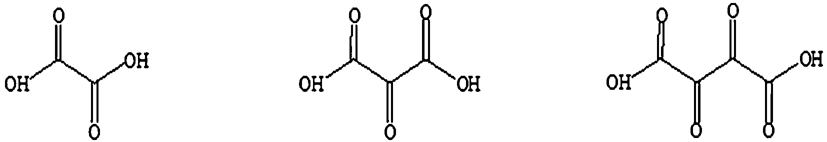 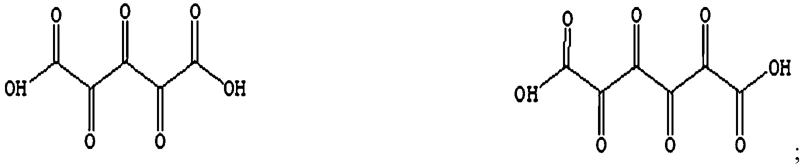 and optionally, the first reactive component comprises one or more of the following compounds:

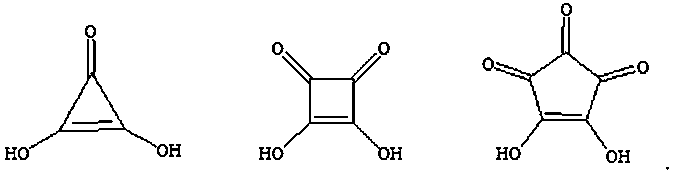

10. The method according to any one of claims 7-9, wherein
a temperature of the drying is less than or equal to a boiling point of the polar organic solvent, optionally, 10°C ≤ (boiling point of the polar organic solvent - drying temperature) ≤ 30°C; and/or,
the drying is spray drying.

11. The method according to any one of claims 7-10, wherein
the polar organic solvent comprises one or more of alcohol solvents, ketone solvents, nitrile solvents, and ether solvents, optionally comprising one or more of ethanol, methanol, acetone, N-methylpyrrolidone, acetonitrile, tetrahydrofuran, and 1,4-dioxane; and/or,
a volume fraction of the polar organic solvent is 80% to 100%, based on a total volume of the solvent; and/or,
the solvent further comprises water, and a volume fraction of water is less than or equal to 20%, based on the total volume of the solvent.

12. The method according to any one of claims 7-11, wherein the sodium-containing layered transition metal oxide comprises one or more of oxides represented by Formula (III):
NaₓMₐA_{b}B_{c}OₘQₙ Formula (III),
wherein 0 < x ≤ 1, 0 < a ≤ 1, 0 ≤ b ≤ 1/3, 0 ≤ c ≤ 1/3, 1.9 ≤ m ≤ 2, and 0 ≤ n ≤ 0.1;
M comprises one or more of Ni, Mn, Fe, Co, and Cu;
A comprises one or more metal elements from Group IA, Group IIA, Group IIIA, Group IVA, Group VA, Group IIB, Group IIIB, Group IVB, Group VB, and Group VIB, optionally comprising one or more elements from Li, K, Mg, Ca, Sr, Ba, Zn, La, Sc, Y, Ti, Zr, V, Nb, Ta, Cr, Mo, W, Al, Sn, Ge, Bi, and Sb;
B comprises one or more non-metal elements from Group IIIA, Group IVA, Group VA, and Group VIA, optionally comprising one or more elements from Si, P, B, S, and Se; and
Q comprises one or more non-metal elements from Group VA and Group VIIA, optionally comprising one or more elements from F, Cl, and N.

13. The method according to any one of claims 7-12, wherein
a volume distribution particle size Dᵥ50 of the sodium-containing layered transition metal oxide is 2000-8000 nm; and/or,
the sodium-containing layered transition metal oxide comprises one or more of O3 phase, P2 phase, and P3 phase.

14. A positive electrode plate, comprising a positive electrode current collector and a positive electrode film layer disposed on at least one surface of the positive electrode current collector, wherein the positive electrode film layer comprises the positive electrode active material according to any one of claims 1-6 or a positive electrode active material prepared by the method according to any one of claims 7-13.

15. The positive electrode plate according to claim 14, wherein a percentage of the positive electrode active material in the positive electrode film layer is 50 wt% to 99 wt%, optionally 85 wt% to 99 wt%, based on a total weight of the positive electrode film layer.

16. A battery cell , comprising the positive electrode plate according to claim 14 or 15.

17. A battery, comprising the battery cell according to claim 16.

18. An electric device, comprising the battery according to claim 17.
